# EUROPEAN PATENT APPLICATION

(11) **EP 4 752 697 A1**
(43) Date of publication of application: **03.06.2026**
(21) Application number: 24844823.5
(22) Date of filing: 25.07.2024
(51) Int. Cl.: G06F 3/0484, G06F 3/0481, G06F 9/451

(54) **CONTROL METHOD AND APPARATUS FOR MULTIMEDIA PLAYBACK APPLICATION, AND ELECTRONIC DEVICE**

(30) Priority: 25.07.2023 CN 202310920024
(71) Applicant: Beijing Zitiao Network Technology Co., Ltd., Beijing 100190 (CN)
(72) Inventor: YE, Zhenyu, Beijing 100028 (CN); YU, Yajie, Beijing 100028 (CN); WANG, Shuangshuang, Beijing 100028 (CN); TAN, Linghui, Beijing 100028 (CN)
(74) Representative: Grünecker Patent- und Rechtsanwälte PartG mbB
(86) International application number: PCT/CN2024/107477
(87) International publication number: WO 2025/021135

(57) **Abstract**

The present disclosure relates to a control method and apparatus for a multimedia playback application, and an electronic device. The method comprises: in the process of a multimedia playback application playing multimedia content, in response to a terminal device entering a locked screen state, displaying a first playback control area and a second playback control area of the multimedia playback application in a lock screen interface, the second playback control area comprising at least one interaction control used for triggering at least one interaction operation for the multimedia playback application; and in response to a user selecting a target interaction control among the at least one interaction control, controlling the multimedia playback application to execute a target interaction operation corresponding to the target interaction control among the at least one interaction operation, and displaying a target interaction result corresponding to the target interaction operation in the first playback control area.

## Description

### CROSS-REFERENCE TO RELATED APPLICATIONS

The present application is based on and claims priority to Chinese Application No. 202310920024.8, filed on July 25, 2023, the disclosure of which is incorporated herein by reference in its entirety.

### TECHNICAL FIELD

The present disclosure relates to the field of computer technologies, and in particular, to a control method and apparatus for a multimedia playback application, an electronic device, and a computer-readable storage medium.

### BACKGROUND

With the continuous development of terminal technologies, the number of applications (Apps) installed in terminal devices has been increasing. The lock screen function of terminal devices can protect data security, prevent accidental touches, save power, etc. Users often have the need to listen to audio while the screen is locked.

### SUMMARY

Embodiments of the present disclosure provide a control method and apparatus for a multimedia playback application, an electronic device, and a computer-readable storage medium, to resolve problems in related technologies.

According to a first aspect of an embodiment of the present disclosure, a control method for a multimedia playback application is provided. The method includes: during playback of multimedia content by using the multimedia playback application, displaying a first playback control area and a second playback control area of the multimedia playback application in a lock screen interface in response to a terminal device entering a lock screen state, where the second playback control area includes at least one interactive control for triggering at least one interaction operation for the multimedia playback application; and controlling the multimedia playback application to perform a target interaction operation in the at least one interaction operation, the target interaction operation corresponding to a target interactive control in the at least one interactive control, and displaying a target interaction result corresponding to the target interaction operation in the first playback control area, in response to a user selecting the target interactive control.

According to a second aspect of an embodiment of the present disclosure, a control apparatus for a multimedia playback application is provided. The apparatus includes: a display module, configured to: during playback of multimedia content by using the multimedia playback application, display a first playback control area and a second playback control area of the multimedia playback application in a lock screen interface in response to a terminal device entering a lock screen state, where the second playback control area includes at least one interactive control for triggering at least one interaction operation for the multimedia playback application; and a control module, configured to control the multimedia playback application to perform a target interaction operation in the at least one interaction operation, the target interaction operation corresponding to a target interactive control in the at least one interactive control, and display a target interaction result corresponding to the target interaction operation in the first playback control area, in response to a user selecting the target interactive control.

According to a third aspect of an embodiment of the present disclosure, an electronic device is provided. The electronic device includes: at least one processor; and a memory, configured to store instructions executable by the at least one processor. The at least one processor is configured to execute the instructions, to implement the steps in the above method.

According to a fourth aspect of an embodiment of the present disclosure, a computer-readable storage medium is provided. Instructions in the computer-readable storage medium, when executed by a processor of an electronic device, cause the electronic device to perform the steps in the above method.

According to a fifth aspect of an embodiment of the present disclosure, a computer program product comprising program instructions is provided. The program instructions, when run on a processor, cause the processor to perform the steps in the above method.

According to a sixth aspect of an embodiment of the present disclosure, a computer program comprising program instructions is provided. The program instructions, when run on a processor, cause the processor to perform the steps in the above method.

### BRIEF DESCRIPTION OF THE DRAWINGS

In order to more clearly describe the technical solutions in embodiments of the present disclosure, the accompanying drawings for describing the embodiments or the related art will be briefly described below. Apparently, the accompanying drawings in the description below show merely the embodiments of the present disclosure, and those of ordinary skill in the art may still derive other accompanying drawings from these accompanying drawings without creative efforts.
FIG. 1 is a schematic flowchart of a control method for a multimedia playback application according to an exemplary embodiment of the present disclosure;
FIG. 2 is a schematic interface diagram of a locked interface according to an exemplary embodiment of the present disclosure;
FIG. 3a and FIG. 3b each are a schematic interface diagram of an unlocked interface according to an exemplary embodiment of the present disclosure;
FIG. 4 is a schematic flowchart of another control method for a multimedia playback application according to an exemplary embodiment of the present disclosure;
FIG. 5 is a schematic structural diagram of a control apparatus for a multimedia playback application according to an exemplary embodiment of the present disclosure;
FIG. 6 is a schematic structural diagram of an electronic device according to an exemplary embodiment of the present disclosure; and
FIG. 7 is a schematic structural diagram of a computer system according to an exemplary embodiment of the present disclosure.

### DETAILED DESCRIPTION

The embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" and variants thereof used herein indicate open inclusion, that is, "include but are not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below. It should be noted that concepts such as "first" and "second" mentioned in the present disclosure are only used to distinguish different apparatuses, modules, or units, and are not used to limit the sequence or interdependence of functions performed by these apparatuses, modules, or units.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

In related technologies, terminal devices support audio playback in a lock screen state, for example, displaying, on a lock screen interface, multimedia content currently played by a multimedia player. However, existing terminal devices support only song pause/play, song fast forward/fast backward, track switching, etc, whereas operations for application functions such as recommendation mode adjustment and song collection require users to first unlock the terminal device, then find a multimedia player, and finally operate the application functions. Therefore, existing control methods for multimedia players fail to meet diverse demands, reduce operation efficiency, increase operation costs, and consequently affect user experience.

A control method and apparatus for a multimedia playback application according to the embodiments of the present disclosure are described in detail below with reference to the accompanying drawings.

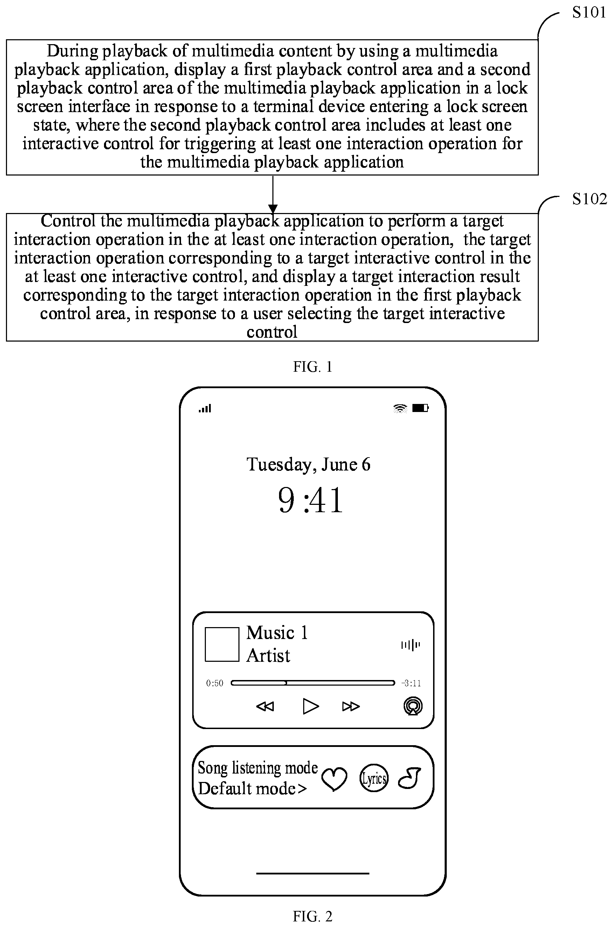

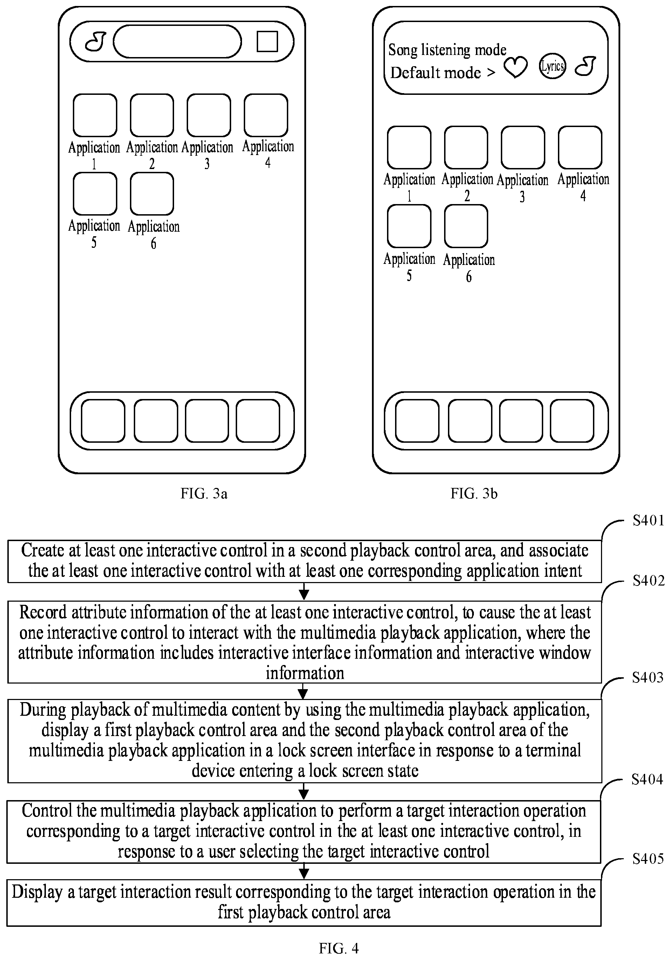

FIG. 1 is a schematic flowchart of a control method for a multimedia playback application according to an exemplary embodiment of the present disclosure. FIG. 2 is a schematic interface diagram of a locked interface according to an exemplary embodiment of the present disclosure. FIG. 3a and FIG. 3b each are a schematic interface diagram of an unlocked interface according to an exemplary embodiment of the present disclosure.

The control method for the multimedia playback application in FIG. 1 may be performed by an electronic device having a specific computing capability. The electronic device may be, for example, a terminal device, a server, or another processing device. As shown in FIG. 1, the control method for the multimedia playback application includes:
S101: During playback of multimedia content by using the multimedia playback application, display a first playback control area and a second playback control area of the multimedia playback application in a lock screen interface in response to a terminal device entering a lock screen state, where the second playback control area includes at least one interactive control for triggering at least one interaction operation for the multimedia playback application.
S102: Control the multimedia playback application to perform a target interaction operation in the at least one interaction operation, the target interaction operation corresponding to a target interactive control in the at least one interactive control, and display a target interaction result corresponding to the target interaction operation in the first playback control area, in response to a user selecting the target interactive control.

Specifically, taking a terminal device as an example, during playback of the multimedia content by using the multimedia playback application, that is, when the multimedia playback application is in a running state, if the user wants to lock the terminal device, the user may perform a lock screen operation on the terminal device through controlling a lock screen button to switch the terminal device to a lock screen state and exit a playback interface. Alternatively, when it is detected that duration in which the multimedia content in the playback interface is in a pause state reaches preset duration, the terminal device automatically switches to the lock screen state. Alternatively, when it is detected that a preset automatic lock screen time has been reached, the terminal device automatically switches to the lock screen state.

When the terminal device is in the lock screen state, the first playback control area and the second playback control area of the multimedia playback application are displayed in the lock screen interface of the terminal device, as shown in FIG. 2. The first playback control area includes at least a playback control block and a playback progress bar. The second playback control area includes at least one interactive control for triggering at least one interaction operation for the multimedia playback application.

Further, when the user wants to perform operations such as collection and mode adjustment on the currently played multimedia content, the user may select, from the at least one interactive control in the second playback control area, an interactive control corresponding to the operation as the target interactive control, to control the multimedia playback application to perform the target interaction operation corresponding to the target interactive control and display the target interaction result corresponding to the target interaction operation in the first playback control area.

Herein, the terminal device may be a user equipment (UE), a mobile device, a cellular phone, a cordless phone, a personal digital assistant (PDA), a handheld device, a computing device, a vehicle-mounted device, a wearable device, etc. The personal digital assistant is a handheld electronic device, which has some functions of an electronic computer, and may be used to manage personal information, surf the Internet, send and receive e-mails, and so on. The personal digital assistant is generally not equipped with a keyboard, and may also be referred to as a palmtop computer. In some possible implementations, the control method for the multimedia playback application may be implemented by a processor by invoking computer-readable instructions stored in a memory. Preferably, in the embodiments of the present disclosure, the terminal device is a mobile device, for example, a mobile phone.

Multimedia means a carrier that carries and transmits specific information or substances, and may include one or more media forms such as a text, an image, a photo, a sound, a picture, and an animation. Multimedia content is data generated based on multimedia, and may include, but is not limited to, audio data and video data. Herein, the audio data may be music, an opera, etc., and the video data may be a TV play video, a movie video, a live video, a short video, etc.

It should be noted that the multimedia content may be a single video, a plurality of arranged short videos or a series of arranged images, for example, a video obtained through combining a plurality of short videos or a combination of a plurality of images.

The multimedia playback application is an application or a player that can play audio or video. The multimedia playback application may be an audio playback application, for example, music playback software; or may be a video playback application, for example, video playback software; or may also be a livestreaming application or a short video application, which is not limited in the embodiments of the present disclosure. Further, the multimedia playback application may be installed in different operating systems. The operating systems may include, but are not limited to, the Android operating system developed by the Google Inc., the iOS operating system developed by the Apple Inc., the Windows operating system developed by the Microsoft Corporation, etc. In the embodiments of the present disclosure, the multimedia playback application is an application that is installed in the iOS operating system for audio and video playback. That the multimedia playback application is in the running state includes that the multimedia playback application is in any running state from start to close.

Both the first playback control area and the second playback control area are areas for controlling the multimedia content being played by the multimedia playback application on the terminal device in the lock screen state. The first playback control area and the second playback control area each may be any area in a user interface (UI). Sizes of the first playback control area and the second playback control area are both smaller than that of a display. The user interface is a medium interface for interaction and information exchange between an application or an operating system and a user, to implement conversion between an internal form of information and a form acceptable to the user. In the embodiments of the present disclosure, the first playback control area is presented by using a system control included in the iOS operating system, and the second playback control area is presented by using a specified function control developed by a third-party developer for a specified application.

A control, also known as a widget or a gadget, is a basic element of a user interface. The control may include, but is not limited to, a button control, a toggle control, an image control, a text control, an input field control, a scroll view control, etc. The first playback control area may include one or more controls, for example, a playback control block control and a playback progress bar control.

The interactive control refers to a control displayed in the second playback control area for performing an interaction operation. Different interactive controls have different interaction functions. Exemplarily, the interactive control may be a mode adjustment control for adjusting a recommendation mode, a collection control for collecting currently played multimedia content, a lyrics display control for displaying lyrics, etc. The number of interactive controls may be set according to actual needs, which is not limited in the embodiments of the present disclosure. For example, the number of interactive controls may be any value within a range from 1 to 10. Preferably, in the embodiments of the present disclosure, considering the screen size of a mobile phone, the number of interactive controls is 3.

The target interactive control refers to an interactive control selected by the user. When it is detected that the user performs a selection operation on the target interactive control, an interaction instruction for the target interactive control may be generated. In response to the interaction instruction, the target interaction operation associated with the target interactive control is performed, and the target interaction result corresponding to the target interaction operation is displayed. Exemplarily, when the mobile phone of the user is in a locked state and the user is listening to a song, if it is detected that the user performs a selection operation on the lyrics display control in the second playback control area, lyrics of the song may be displayed in the second playback control area.

It should be note that the target interaction result may be presented in the first playback control area or may be presented in the second playback control area, which is not limited in the embodiments of the present disclosure.

In the technical solutions according to the embodiments of the present disclosure, during playback of the multimedia content by using the multimedia playback application, the first playback control area and the second playback control area of the multimedia playback application are displayed in the lock screen interface in response to the terminal device entering the lock screen state, where the second playback control area includes at least one interactive control for triggering at least one interaction operation for the multimedia playback application; and the multimedia playback application is controlled to perform the target interaction operation in the at least one interaction operation, the target interaction operation corresponding to the target interactive control in the at least one interactive control, and the target interaction result corresponding to the target interaction operation is displayed in the first playback control area, in response to the user selecting the target interactive control. Consequently, when the terminal device is in the lock screen state, flexible control for the multimedia playback application by the user can be achieved. Therefore, diverse demands are met, operation efficiency is improved, operation costs are reduced, and user experience is further enhanced.

In some embodiments, the method further includes: creating the at least one interactive control in the second playback control area, and associating the at least one interactive control with at least one corresponding application intent; and recording attribute information of the at least one interactive control, to cause the at least one interactive control to interact with the multimedia playback application, where the attribute information includes interactive interface information and interactive window information.

Specifically, to meet the user's need for diversity, the at least one interactive control may be created in advance in the second playback control area, and the at least one interactive control is associated with the at least one corresponding application intent. In other words, in response to a trigger operation for the at least one interactive control, the multimedia playback application is controlled to execute at least one application function corresponding to the at least one interactive control.

For example, an application intent may be created for a "collection button", for example, a collection song intent (CollectionSongIntent). When the user clicks the "collection button", the "collection song intent" triggers a function of adding a song to the collection list. For another example, an application intent may be created for a "recommendation mode toggle button", for example, a switch recommendation mode intent (SwitchRecommendationModeIntent). When the user clicks the "recommendation mode toggle button", the "switch recommendation mode intent" triggers a function of switching between different recommendation modes.

In the technical solutions according to the embodiments of the present disclosure, the interactive control can be created based on the application intent, to meet the user's need for diversity and improve user experience.

In some embodiments, the at least one interactive control includes a collection control, and the controlling the multimedia playback application to perform a target interaction operation in the at least one interaction operation, the target interaction operation corresponding to a target interactive control in the at least one interactive control, and displaying a target interaction result corresponding to the target interaction operation in the first playback control area, in response to a user selecting the target interactive control includes: in response to selecting the collection control as the target interactive control in the second playback control area, adding currently played first multimedia content to the collection list of the multimedia playback application when it is determined that the user does not collect the first multimedia content.

Specifically, when a trigger operation performed by the user for the collection control in the second playback control area is detected, it is possible to look up whether the currently played first multimedia content is present in the collection list of the multimedia playback application. If the currently played first multimedia content is not present in the collection list, it indicates that the user has not yet collect the currently played first multimedia content. In this case, the first multimedia content may be added to the collection list of the multimedia playback application. If the currently played first multimedia content is present in the collection list, it indicates that the user has already collect the currently played first multimedia content. In this case, reminder information may be sent to the user, for example, by using a pop-up window. Herein, the collection control is space used to collect the currently played first multimedia content.

In the technical solutions according to the embodiments of the present disclosure, multimedia content can be collected when the terminal device is in the locked state. Consequently, operation efficiency is improved, operation time is saved, operation costs are reduced, and user experience is further enhanced.

In some embodiments, the at least one interactive control includes a mode adjustment control, and the controlling the multimedia playback application to perform a target interaction operation in the at least one interaction operation, the target interaction operation corresponding to a target interactive control in the at least one interactive control, and displaying a target interaction result corresponding to the target interaction operation in the first playback control area, in response to a user selecting the target interactive control includes: in response to selecting the mode adjustment control as the target interactive control in the second playback control area, playing second multimedia content in a preset media recommendation mode in the first playback control area, where the preset media recommendation mode includes any one of a default mode, a familiar mode, a scenario-specific mode, and a novelty mode.

Specifically, when a trigger operation performed by the user for the mode adjustment control in the second playback control area is detected, a media recommendation mode associated with the mode adjustment control may be displayed in the second playback control area. When it is detected that the user performs a selection operation on any media recommendation mode, the currently played first multimedia content can be switched to second multimedia content in the first playback control area, and the second multimedia content is played in the recommendation mode.

Herein, the mode adjustment control is a control for adjusting the media recommendation mode, and may include a plurality of mode adjustment sub-controls to respectively correspond to different media recommendation modes. The media recommendation mode may include, but is not limited to, a default mode, a familiar mode, a scenario-specific mode, and a novelty mode. For example, if the user selects the "default mode", the media recommendation mode currently being employed is not changed. If the user selects the "familiar mode", it indicates that the user expects to receive a recommendation of multimedia content to which the user often listens. If the user selects the "scenario-specific mode", it indicates that the user expects to receive a recommendation of multimedia content suitable for listening in a scene such as learning or fitness. If the user selects the "novelty mode", it indicates that the user expects to receive a recommendation of multimedia content to which the user has not listened and/or listened less frequently.

In the technical solutions according to the embodiments of the present disclosure, it is possible to implement a cross-genre content recommendation when the terminal device is in a lock screen state, to reduce barriers between genres and meet the user's need for diversity. In addition, the user can implement consumption between a plurality of different genres of content without unlocking the terminal device, which improves operation efficiency and reduces operation costs. This further improves user experience.

In some embodiments, the interactive window information includes an interactive window in the form of Dynamic Island. The method further includes: displaying the interactive window in the form of Dynamic Island at the top of an unlock interface in response to a trigger operation of the user for the terminal device; and displaying a third playback control area in the unlock interface in response to a trigger operation of the user for the interaction window in the form of Dynamic Island, where the third playback control area includes at least one interactive control.

Specifically, after the user unlocks the terminal device, the multimedia playback application currently playing multimedia content is not switched to the background for running, but is dynamically displayed directly in Dynamic Island at the top of the unlock interface, as shown in FIG. 3a. When the user interacts with Dynamic Island, Dynamic Island is expanded to form the third playback control area, as shown in FIG. 3b. At least one interactive control is included in the third playback control area. The user may trigger at least one interaction operation for the multimedia playback application by using a trigger operation for the target interactive control in the at least one interactive control, for example, switching a song, and collecting a song.

Herein, Dynamic Island is a new interactive interface designed by the Apple Inc., and may automatically changes a size and a shape based on different application operations and prompts, notifications and activity content requirements. In addition, Dynamic Island can remain active without affecting display of screen content, so that the user can use a control option with just a long press. Applications such as Maps and Music and activities kept running on the background, such as a timer, are always visible and interactive, and can also display important prompts, notifications, and activity information in real time. In addition, Dynamic Island is also available to third-party applications such as match scores and flight information through "live activities".

The third playback control area is an area for controlling the multimedia content being played by the multimedia playback application on the terminal device in the unlocked state. The third playback control area is located at the top of the display. A size of the third playback control area is smaller than that of the display.

In the technical solutions according to the embodiments of the present disclosure, after the terminal device is unlocked, the multimedia playback application is not switched to the background, but is dynamically displayed directly in Dynamic Island, so that the user can operate the multimedia playback application in Dynamic Island. This not only provides the user with unique visual experience and convenient information display, but also provides the user with an easy and convenient operation manner.

In some embodiments, the method further includes: monitoring a data change of the multimedia playback application, and updating the at least one interactive control in the second playback control area based on the data change.

Specifically, the data change of the multimedia playback application is monitored in real time, for example, a change of the collection list and a change of the recommendation mode, and the at least one interactive control in the second playback control area is updated based on the changed data, to ensure that the user interface is always up to date, that is, the user interface can reflect an actual state of the multimedia playback application.

In some embodiments, the method further includes: adding an animation effect to the at least one interactive control, where the animation effect includes at least one of a fade-in animation effect, a fade-out animation effect, a slide-in animation effect, or a slide-out animation effect; and in response to the user selecting the target interactive control in the at least one interactive control, presenting an animation effect associated with the target interactive control.

Specifically, the user interface is a medium for interaction and exchange of information between a system and the user. The user interface includes user interface controls such as a text, an image, a button, a switch, a scrollbar, a chart, or an input box. The terminal device can interact with the user through these user interface controls. To meet a need to customize different display and hide animation effects for the user interface controls, the corresponding animation effect may be added for the at least one interactive control in the second playback control area, so that the animation effect associated with the target interactive control in the at least one interactive control can be presented when the user selects the target interactive control.

Herein, the animation effect may include at least one of a fade-in animation effect, a fade-out animation effect, a slide-in animation effect, or a slide-out animation effect. The fade-in animation effect is an animation effect in which transparency gradually changes from first transparency to second transparency. The fade-out animation effect is an animation effect in which transparency gradually changes from the second transparency to the first transparency. The first transparency may be any transparency, and the second transparency may be transparency when the target interface is fully displayed. Exemplarily, the second transparency may be 1, and the first transparency may be any real number greater than or equal to 0 and less than 1, for example, 0.8, 0.7, 0.5, 0.2, or 0. The slide-in animation effect is an animation effect of sliding in from any side of the display. The slide-out animation effect is an animation effect of sliding out from any side of the display. Exemplarily, the user interface controls may be controlled to slide in or out from a left side, a right side, an upper side, or a lower side of the display.

In some embodiments, the animation effect may alternatively be a glow animation effect. The glow animation effect may be that a collection control blinks at preset intervals to direct the user to collect the currently played first media content. For example, the collection control may blink at 1-second intervals, or may blink at 2-second intervals; and the collection control may blink for a total of three times, or four times, which is not limited in the embodiments of the present disclosure.

In the technical solutions according to the embodiments of the present disclosure, the user interface control can be flexibly displayed and hidden through adding the animation effect for the interactive control, to meet a need to customize different display and hide animation effects for the user interface controls.

All of the above optional technical solutions may be combined in any way, to form optional embodiments of the present disclosure, and details are not described again herein. In addition, the order of sequence numbers of the steps in the above embodiments does not mean the order of execution, and the execution order of each process is determined based on functions and internal logic of the process, and should not be construed as any limitation on the implementation process of the embodiments of the present disclosure.

FIG. 4 is a schematic flowchart of another control method for a multimedia playback application according to an exemplary embodiment of the present disclosure. The control method of the multimedia playback application in FIG. 4 can be performed by an electronic device. As shown in FIG. 4, the control method for the multimedia playback application includes:
S401: Create at least one interactive control in a second playback control area, and associate the at least one interactive control with at least one corresponding application intent.
S402: Record attribute information of the at least one interactive control, to cause the at least one interactive control to interact with the multimedia playback application, where the attribute information includes interactive interface information and interactive window information.
S403: During playback of multimedia content by using the multimedia playback application, display a first playback control area and the second playback control area of the multimedia playback application in a lock screen interface in response to a terminal device entering a lock screen state.
S404: Control the multimedia playback application to perform a target interaction operation corresponding to a target interactive control in the at least one interactive control, in response to a user selecting the target interactive control.
S405: Display a target interaction result corresponding to the target interaction operation in the first playback control area.

In the technical solutions according to the embodiments of the present disclosure, by creating the at least one interactive control for interaction with the multimedia playback application in the second playback control area, when the multimedia playback application is playing the multimedia content and the terminal device is in the locked state, the multimedia playback application can be controlled, through selecting the target interactive control in the at least one interactive control, to perform the target interaction operation corresponding to the target interactive control. Consequently, flexible control for the multimedia playback application by the user is achieved, to meet a need for diversity, operation efficiency is improved, operation costs are reduced, and user experience is further enhanced.

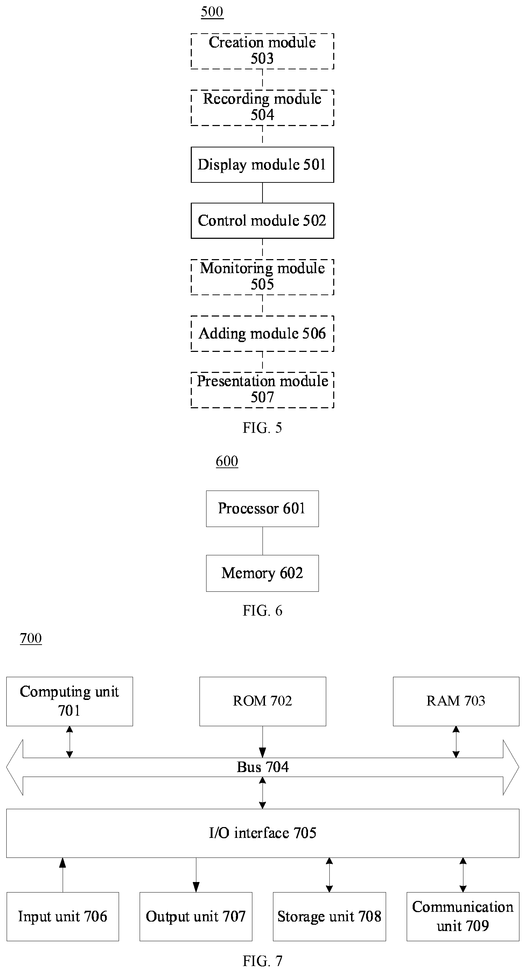

When division into various functional modules corresponding to various functions is performed, the embodiments of the present disclosure provide a control apparatus for a multimedia playback application. The control apparatus for the multimedia playback application may be a server or a chip applied to a server. FIG. 5 is a schematic structural diagram of a control apparatus for a multimedia playback application according to an exemplary embodiment of the present disclosure. As shown in FIG. 5, the control apparatus 500 for the multimedia playback application includes:
a display module 501, configured to: during playback of multimedia content by using the multimedia playback application, display a first playback control area and a second playback control area of the multimedia playback application in a lock screen interface in response to a terminal device entering a lock screen state, where the second playback control area includes at least one interactive control for triggering at least one interaction operation for the multimedia playback application; and
a control module 502, configured to control the multimedia playback application to perform a target interaction operation in the at least one interaction operation, the target interaction operation corresponding to a target interactive control in the at least one interactive control, and display a target interaction result corresponding to the target interaction operation in the first playback control area, in response to a user selecting the target interactive control.

In the technical solutions according to the embodiments of the present disclosure, during playback of the multimedia content by using the multimedia playback application, the first playback control area and the second playback control area of the multimedia playback application are displayed in the lock screen interface in response to the terminal device entering the lock screen state, where the second playback control area includes at least one interactive control for triggering at least one interaction operation for the multimedia playback application; and the multimedia playback application is controlled to perform the target interaction operation in the at least one interaction operation, the target interaction operation corresponding to the target interactive control in the at least one interactive control, and the target interaction result corresponding to the target interaction operation is displayed in the first playback control area, in response to the user selecting the target interactive control. In this way, when the terminal device is in the lock screen state, the user can flexibly control the multimedia playback application, to meet a need for diversity, which reduces operation efficiency and increases operation costs. This further improves user experience.

In some embodiments, the control apparatus 500 for the multimedia playback application in FIG. 5 further includes: a creation module 503, configured to create at least one interactive control in the second playback control area, and associate the at least one interactive control with at least one corresponding application intent; and a recording module 504, configured to record attribute information of the at least one interactive control, to cause the at least one interactive control to interact with the multimedia playback application, where the attribute information includes interactive interface information and interactive window information.

In some embodiments, the at least one interactive control includes a collection control. In response to selecting the collection control as the target interactive control in the second playback control area, the control module 502 in FIG. 5 adds currently played first multimedia content to a collection list of the multimedia playback application when it is determined that the user does not collect the first multimedia content.

In some embodiments, the at least one interactive control includes a mode adjustment control. In response to selecting the mode adjustment control as the target interactive control in the second playback control area, the control module 502 in FIG. 5 plays second multimedia content in a preset media recommendation mode in the first playback control area, where the preset media recommendation mode includes any one of a default mode, a familiar mode, a scenario-specific mode, and a novelty mode.

In some embodiments, the interactive window information includes an interactive window in the form of Dynamic Island. The display module 501 in FIG. 5 displays the interactive window in the form of Dynamic Island at the top of an unlock interface in response to a trigger operation of the user for the terminal device; and displays a third playback control area in the unlock interface in response to a trigger operation of the user for the interaction window in the form of Dynamic Island, where the third playback control area includes at least one interactive control.

In some embodiments, the control apparatus 500 for the multimedia playback application in FIG. 5 further includes: a monitoring module 505, configured to monitor a data change of the multimedia playback application, and update the at least one interactive control in the second playback control area based on the data change.

In some embodiments, the control apparatus 500 for the multimedia playback application in FIG. 5 further includes: an adding module 506, configured to add an animation effect to the at least one interactive control, where the animation effect includes at least one of a fade-in animation effect, a fade-out animation effect, a slide-in animation effect, or a slide-out animation effect; and a presentation module 507, configured to: in response to the user selecting the target interactive control in the at least one interactive control, present an animation effect associated with the target interactive control.

For details of an implementation process of functions and roles of various modules in the above apparatus, refer to implementation processes of the corresponding steps in the above method. Details are not be described herein again.

An embodiment of the present disclosure further provides an electronic device. The electronic device includes: at least one processor; and a memory, configured to store instructions executable by the at least one processor. The at least one processor is configured to execute the instructions, to implement the steps in the above method disclosed in the embodiments of the present disclosure.

FIG. 6 is a schematic structural diagram of an electronic device according to an exemplary embodiment of the present disclosure. As shown in FIG. 6, the electronic device 600 includes at least one processor 601 and a memory 602 coupled to the processor 601. The processor 601 may perform the corresponding steps in the above method disclosed in the embodiments of the present disclosure.

The processor 601 may also be referred to as a central processing unit (CPU) that may be an integrated circuit chip with a signal processing capability. The steps in the above method disclosed in the embodiments of the present disclosure may be completed by an integrated logic circuit of hardware in the processor 601 or an instruction in a software form. The above processor 601 may be a general-purpose processor, a digital signal processor (DSP), an ASIC, a field-programmable gate array (FPGA) or another programmable logic device, a discrete gate or transistor logic device, or a discrete hardware component. The general-purpose processor may be a microprocessor, or the processor may be any conventional processor or the like. The steps of the method disclosed in combination with the embodiments of the present disclosure may be directly embodied as being completed by a hardware decoding processor, or by a combination of hardware in the decoding processor and a software module. The software module may be located in the memory 602, for example, a mature storage medium in the art, such as a random access memory, a flash memory, a read-only memory, a programmable read-only memory, an electrically erasable programmable memory, or a register. The processor 601 reads information in the memory 602, and completes the steps in the above method in combination with the hardware of the processor.

In addition, when various operations/processing according to the present disclosure are implemented by software and/or firmware, programs constituting the software may be installed from the storage medium or a network to a computer system with a dedicated hardware structure, such as a computer system 700 shown in FIG. 7. When installed with various programs, the computer system can perform various functions, including the functions described above, etc. FIG. 7 is a schematic structural diagram of a computer system according to an exemplary embodiment of the present disclosure.

The computer system 700 is intended to represent various forms of digital electronic computer devices, such as laptop computers, desktop computers, workbenches, personal digital assistants, servers, blade servers, mainframe computers, and other suitable computers. The electronic device may alternatively represent various forms of mobile apparatuses, such as personal digital processing, cellular telephones, smartphones, wearable devices, and other similar computing apparatuses. Components, their connections and relationships, and their functions shown herein are only examples, and are not intended to limit the implementation of the present disclosure described and/or claimed herein.

As shown in FIG. 7, the computer system 700 includes a computing unit 701. The computing unit 701 may perform a variety of appropriate actions and processing in accordance with a computer program stored in a read-only memory (ROM) 702 or a computer program loaded from a storage unit 708 into a random access memory (RAM) 703. The RAM 703 may further store various programs and data required for the operation of the computer system 700. The computing unit 701, the ROM 702, and the RAM 703 are connected to each other through a bus 704. An input/output (I/O) interface 705 is also connected to the bus 704.

A plurality of components in the computer system 700 are connected to the I/O interface 705, including: an input unit 706, an output unit 707, a storage unit 708, and a communication unit 709. The input unit 706 may be any type of device that can input information to the computer system 700, and the input unit 706 may receive input numeric or character information, and generate key signal inputs related to user settings and/or function control of the electronic device. The output unit 707 may be any type of device that can present information, and may include but is not limited to a display, a speaker, a video/audio output terminal, a vibrator, and/or a printer. The storage unit 708 may include but is not limited to a magnetic disk and an optical disc. The communication unit 709 allows the computer system 700 to exchange information/data with other devices through a network, such as the Internet, and may include but is not limited to a modem, a network adapter, an infrared communication device, a wireless communication transceiver, and/or a chipset, such as a Bluetooth TM device, a Wi-Fi device, a WiMax device, a cellular communication device, and/or analogues.

The computing unit 701 may be various general-purpose and/or special-purpose processing components with processing and computing capabilities. Some examples of the computing unit 701 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, etc. The computing unit 701 performs the various methods and processing described above. For example, in some embodiments, the above method disclosed in the embodiments of the present disclosure may be implemented as a computer software program tangibly embodied in a machine-readable medium, such as the storage unit 708. In some embodiments, some or all of the computer programs may be loaded into and/or installed onto the electronic device 700 via the ROM 702 and/or the communication unit 709. In some embodiment, the computing unit 701 may be configured to perform, in any other appropriate manner (for example, by means of firmware), the method disclosed in the embodiments of the present disclosure.

The embodiments of the present disclosure also provide a computer-readable storage medium. Instructions in the computer-readable storage medium, when executed by a processor of an electronic device, enable the electronic device to perform the above method disclosed in embodiments of the present disclosure.

A machine-readable storage medium in the embodiments of the present disclosure may be a tangible medium that may contain or store a program used by or in combination with an instruction execution system, apparatus, or device. The computer-readable storage medium may include, but is not limited to, electronic, magnetic, optical, electromagnetic, infrared, or semiconductor systems, apparatuses, or devices, or any suitable combination thereof. More specifically, the computer-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

The above computer-readable medium may be contained in the above electronic device. Alternatively, the computer-readable medium may exist independently, without being assembled into the electronic device.

An embodiment of the present disclosure further provides a computer program product, including a computer program that, when executed by a processor, implements the method according to the embodiments of the present disclosure.

In the embodiments of the present disclosure, the computer program code used to perform the operations in the present disclosure may be written in one or more programming languages or a combination thereof. The programming languages include but are not limited to an object-oriented programming language, such as Java, Smalltalk, and C++, and further include conventional procedural programming languages, such as a "C" language or similar programming languages. The program code may be completely executed on a computer of a user, partially executed on a computer of a user, executed as an independent software package, partially executed on a computer of a user and partially executed on a remote computer, or completely executed on a remote computer or server. In a case of the remote computer, the remote computer may be connected to the computer of the user through any kind of network (including a local area network (LAN) or a wide area network (WAN)), or may be connected to an external computer.

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related modules, components, or units described in the embodiments of the present disclosure may be implemented by software, or may be implemented by hardware. The names of the modules, components, or units do not constitute a limitation on the modules, components, or units in some cases.

The functions described herein above may be performed at least partially by one or more hardware logic components. For example, without limitation, example hardware logic components that may be used include a field programmable gate array (FPGA), an application-specific integrated circuit (ASIC), an application-specific standard product (ASSP), a system-on-chip (SOC), a complex programmable logic device (CPLD), and the like.

The above descriptions are merely illustrations of some embodiments of the present disclosure and the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

While some specific embodiments of the present disclosure have been exemplarily described in detail, it should be understood by those skilled in the art that the above examples are merely for illustration and are not intended to limit the scope of the present disclosure. Those skilled in the art should understand that various modifications can be made to the above embodiments, without departing from the scope and spirit of the present disclosure. The scope of the present disclosure is defined by the appended claims.

## Claims

1. A control method for a multimedia playback application, comprising:
during playback of multimedia content by using the multimedia playback application, displaying a first playback control area and a second playback control area of the multimedia playback application in a lock screen interface in response to a terminal device entering a lock screen state, wherein the second playback control area comprises at least one interactive control for triggering at least one interaction operation for the multimedia playback application; and
controlling the multimedia playback application to perform a target interaction operation in the at least one interaction operation, the target interaction operation corresponding to a target interactive control in the at least one interactive control, and displaying a target interaction result corresponding to the target interaction operation in the first playback control area, in response to a user selecting the target interactive control.

2. The method according to claim 1, wherein the method further comprises:
creating the at least one interactive control in the second playback control area, and associating the at least one interactive control with at least one corresponding application intent; and
recording attribute information of the at least one interactive control, to cause the at least one interactive control to interact with the multimedia playback application, wherein the attribute information comprises interactive interface information and interactive window information.

3. The method according to claim 2, wherein the at least one interactive control comprises a collection control, and the controlling the multimedia playback application to perform a target interaction operation in the at least one interaction operation, the target interaction operation corresponding to a target interactive control in the at least one interactive control, and displaying a target interaction result corresponding to the target interaction operation in the first playback control area, in response to a user selecting the target interactive control comprises:
in response to selecting the collection control as the target interactive control in the second playback control area, adding currently played first multimedia content to a collection list of the multimedia playback application when it is determined that the user does not collect the first multimedia content.

4. The method according to claim 2, wherein the at least one interactive control comprises a mode adjustment control, and the controlling the multimedia playback application to perform a target interaction operation in the at least one interaction operation, the target interaction operation corresponding to a target interactive control in the at least one interactive control, and displaying a target interaction result corresponding to the target interaction operation in the first playback control area, in response to a user selecting the target interactive control comprises:
in response to selecting the mode adjustment control as the target interactive control in the second playback control area, playing second multimedia content in a preset media recommendation mode in the first playback control area, wherein the preset media recommendation mode comprises any one of a default mode, a familiar mode, a scenario-specific mode, and a novelty mode.

5. The method according to any one of claims 2 to 4, wherein the interactive window information comprises an interactive window in the form of Dynamic Island, and the method further comprises:
displaying the interactive window in the form of Dynamic Island at the top of an unlock interface in response to a trigger operation of the user for the terminal device; and
displaying a third playback control area in the unlock interface in response to a trigger operation of the user for the interaction window in the form of Dynamic Island, wherein the third playback control area comprises the at least one interactive control.

6. The method according to any one of claims 1 to 5, wherein the method further comprises:
monitoring a data change of the multimedia playback application, and updating the at least one interactive control in the second playback control area based on the data change.

7. The method according to any one of claims 1 to 6, wherein the method further comprises:
adding an animation effect to the at least one interactive control, wherein the animation effect comprises at least one of a fade-in animation effect, a fade-out animation effect, a slide-in animation effect, or a slide-out animation effect; and
in response to the user selecting the target interactive control in the at least one interactive control, presenting an animation effect associated with the target interactive control.

8. A control apparatus for a multimedia playback application, comprising:
a display module, configured to: during playback of multimedia content by using the multimedia playback application, display a first playback control area and a second playback control area of the multimedia playback application in a lock screen interface in response to a terminal device entering a lock screen state, wherein the second playback control area comprises at least one interactive control for triggering at least one interaction operation for the multimedia playback application; and
a control module, configured to control the multimedia playback application to perform a target interaction operation in the at least one interaction operation, the target interaction operation corresponding to a target interactive control in the at least one interactive control, and display a target interaction result corresponding to the target interaction operation in the first playback control area, in response to a user selecting the target interactive control.

9. An electronic device, comprising:
at least one processor; and
a memory, configured to store instructions executable by the at least one processor, wherein
the at least one processor is configured to execute the instructions, to implement the method according to any one of claims 1 to 7.

10. A computer-readable storage medium, wherein instructions in the computer-readable storage medium, when being executed by a processor of an electronic device, cause the electronic device to perform the method according to any one of claims 1 to 7.

11. A computer program product, comprising program instructions that, when run on a processor, cause the processor to perform the method according to any one of claims 1 to 7.

12. A computer program, comprising program instructions that, when run on a processor, cause the processor to perform the method according to any one of claims 1 to 7.
